# EUROPEAN PATENT SPECIFICATION

(11) **EP 1 691 970 B1**
(45) Date of publication and mention of the grant of the patent: **02.10.2013**
(21) Application number: 03786200.0
(22) Date of filing: 09.12.2003
(51) Int. Cl.: B29D 30/46, B29C 53/60

(54) **A PROCESS AND APPARATUS FOR PRODUCING A SEMIFINISHED PRODUCT FOR MANUFACTURING TYRES FOR VEHICLE WHEELS**
VERFAHREN UND VORRICHTUNG ZUM HERSTELLEN VON HALBZEUGEN FÜR DIE REIFENHERSTELLUNG
PROCEDE ET APPAREIL PERMETTANT DE FORMER UN PRODUIT SEMI-FINI DESTINE A LA FABRICATION DE PNEUS POUR ROUES DE VEHICULES

(43) Date of publication of application: 23.08.2006
(73) Proprietor: Pirelli Tyre S.p.A., 20126 Milano (IT)
(72) Inventor: LACAGNINA, Claudio, Pirelli Tyre S.p.A., I-20126 Milano (IT)
(74) Representative: Tansini, Elio Fabrizio
(86) International application number: PCT/IT2003/000807
(87) International publication number: WO 2005/056277

(56) References cited:
- EP-A- 0 927 629
- GB-A- 815 413
- US-A- 1 504 255
- US-A- 3 157 545
- DATABASE WPI Section Ch, Week 197551 Derwent Publications Ltd., London, GB; Class F07, AN 1975-84387W XP002292223 -& SU 446 435 A (MIKHAILOV M P), 15 October 1974 (1974-10-15)

## Description

The present invention relates to a process and an apparatus for producing a semifinished product for manufacturing tyres for vehicle wheels. More specifically said semifinished product comprises a plurality of elongated reinforcing elements incorporated in an elastomer material.

The invention also pertains to a method and a plant for producing pneumatic tyres comprising the above mentioned process and apparatus, respectively.

It is known that manufacture of a tyre for vehicle wheels generally involves preparation of a carcass structure comprising one or more carcass plies each of which is formed through circumferential winding of at least one semifinished product on a building drum or assembling machine, which semifinished product comprises textile or metallic reinforcing cords directed transversely of the longitudinal extension of the manufactured article itself.

When winding has been completed, the respectively opposite end flaps of the carcass ply are turned up like a flipper around annular anchoring structures, each being usually formed of a substantially circumferential annular insert to which at least one filling insert is applied, at a radially external position.

Associated with the carcass structure is then a belt structure comprising one or more belt layers, placed in radial overlapping relationship with respect to each other, and to the carcass ply and having textile or metallic reinforcing cords with a crossed orientation and/or substantially parallel to the circumferential extension direction of the tyre. A tread band also made of elastomer material like other semifinished products constituting the tyre, is applied to the belt structure at a radially external position thereof.

To the aims of the present description it should be pointed out that by the term "elastomer material" it is intended a composition comprising at least one elastomer polymer and at least one reinforcing filler. Preferably, this composition further comprises additives such as cross-linking and/or plasticizing agents. Due to the presence of the cross-linking agents, this material can be cross-linked through heating, so as to form the final manufactured article. In addition, before or after application of the tread band, respective sidewalls of elastomer material are applied to the side surfaces of the carcass structure, each extending from one of the side edges of the tread band to close to the respective annular anchoring reinforcing structure at the beads.

The semifinished product employed to make the carcass ply is usually obtained by cutting to size a section of a continuous manufactured article obtained in a preceding working step. In more detail, manufacture of such an article involves a preliminary working operation in which, through calendering for example, a plurality of cords disposed parallel to each other are coated with a layer of raw elastomer material, so as to obtain a continuous manufactured article in which said cords are oriented lengthwise. Subsequently, the manufactured article is transversely cut to obtain sections of a length corresponding to the transverse size of the manufactured article to be obtained.

These sections are sequentially joined either end-to-end or with a slight overlapping to form the continuous manufactured' article the cords of which are directed transversely of the longitudinal extension thereof.

An example of how to make a continuous article of manufacture following the above modalities is described in document US 2003/0051794 A1.

In document US 2002/0195186 A1 it is suggested preparation of a manufactured article for use in making a carcass ply, starting from a continuously-extruded ribbon-like element comprising cords disposed in longitudinal side by side relationship and incorporated in a layer of elastomer material.

The extruded ribbon-like element is spirally wound around a cylindrical drum so that the side edges of each coil are in tight contact with each other, thereby forming a cylindrical sleeve. The cylindrical sleeve is subsequently cut in a direction orthogonal to the coil winding angle. The cylindrical sleeve is then laid down in a plane so as to obtain a manufactured article in the form of a rectangular sheet consisting of a plurality of ribbon sections disposed parallel and close to each other. The manufactured article in the form of a sheet is subsequently wound on a cylindrical drum, so that the ribbon sections shall extend parallel to the geometric axis of the drum itself, thereby forming a carcass ply in the form of a sleeve having cords oriented parallel to its geometric axis, to be used in making a tyre.

The Applicant however has perceived that the above described method imposes a discontinuous manufacture of the semifinished product, the sizes of which both in the longitudinal and in the transverse direction are directly correlated with the longitudinal and circumferential extension respectively of the cylindrical support on which the continuous ribbon is wound.

Document EP 1 226 926 disclosed an apparatus equipped with two cylindrical rollers located at a winding station and a cutting station, respectively. The rollers are mounted on a rotatable support that, through a rotation of 180°, allows positioning exchange of same between the winding station and the cutting station. At the winding station a continuous ribbon comprising cords disposed in longitudinal side by side relationship and incorporated in an elastomer layer, is spirally wound on the respective roller, with the coil edges close to each other to form a cylindrical tubular sleeve. Through a rotation of 180° of the rotatable support the roller covered with the tubular sleeve is brought to the cutting station, at which the tubular sleeve is cut during two subsequent steps, according to two generatrices placed at diametrically opposite positions, so as to form two rectangular semifinished products having a length corresponding to the axial size of the tubular sleeve and a width corresponding to the semi-circumference of the tubular sleeve itself.

Each semifinished product having cords disposed in parallel side by' side relationship and oriented transversely of its longitudinal extension is adapted to be separated from the cylindrical roller to be used for making a carcass ply for a tyre.

However, the above described apparatus too imposes a discontinuous working process for obtaining the semifinished products to be used in making the carcass plies. In addition, in this process the maximum longitudinal size of the obtainable semifinished products is directly connected with the axial extension of the roller on which the ribbon-like element is would.

Other apparatuses are known, for example, by US-A 3 157 545, GB-A 815 413, or SU-A 446 435, wherein a continuous fabric layer is obtained by a cord or fabric which is tangentially directed to and wound on the surface of a rotating winding drum or form.

In accordance with the present, invention, the Applicant has become aware of the possibility of achieving unexpected advantages in terms of simplification of the required equipment for manufacturing a semifinished product, as well as in terms of productivity and operational flexibility in manufacturing tyres having geometric and construction features different from each other, also in lots of small amounts, by putting into practice a continuous production process in which a tubular manufactured article obtained by winding of a continuous elongated element into coils disposed in side by side relationship is longitudinally moved away from the winding region to a cutting region.

In accordance with the invention it is therefore possible to produce reels of semifinished product without discontinuities connected with the preparation junctions present in known processes. In addition it is possible to wind up said semifinished product to enable subsequent interlocking with several assembling machines of a type known in the art, by a continuous feeding of the semifinished product without a preliminary cut being required. In particular, in accordance with a first aspect of the present invention, it is proposed a process for producing a semifinished product consisting of a plurality of elongated reinforcing elements incorporated in an elastomer material, as claimed in claim 1.

In a second aspect of the invention it is also proposed an apparatus for producing a semifinished product including a plurality of elongated reinforcing elements incorporated in an elastomer material as claimed in claim 25.

In a third aspect, the invention relates to a method of producing vehicle tyres as claimed in claim 22.

In a fourth aspect, the invention relates to a plant for making tyres for vehicle wheels, as claimed in claim 37.

Other preferred embodiments of the invention are defined in the remaining dependent claims.

Further features and advantages will become more apparent from the detailed description of a preferred but not exclusive embodiment of a method and an apparatus for continuously making a manufactured article to be employed in tyre manufacturing, in accordance with the present invention. This description will be set out hereinafter with reference to the accompanying drawings, given by way of non-limiting example, in which:
- Fig. 1 is a diagrammatic side view of an apparatus for continuously producing a semifinished product in accordance with the present invention;
- Fig. 2 shows the apparatus seen from the right side with respect to Fig. 1;
- Fig. 3 shows a detail of the apparatus in reference to an enlarged scale;
- Fig. 4 is a side view of an alternative embodiment of the apparatus;
- Fig. 5 is a diagrammatic side view of a further alternative embodiment of the invention;
- Fig. 6 shows a detail to an enlarged scale of the apparatus of the invention, in a possible alternative embodiment,
- Fig. 7 is a cross-section view, by way of example, of a tyre obtainable in accordance with the present invention.

With reference to the drawings, designed as 1 is an apparatus for producing a semifinished product comprising a plurality of elongated reinforcing elements incorporated in an elastomer material designed to make tyres for vehicle wheels in accordance with the present invention.

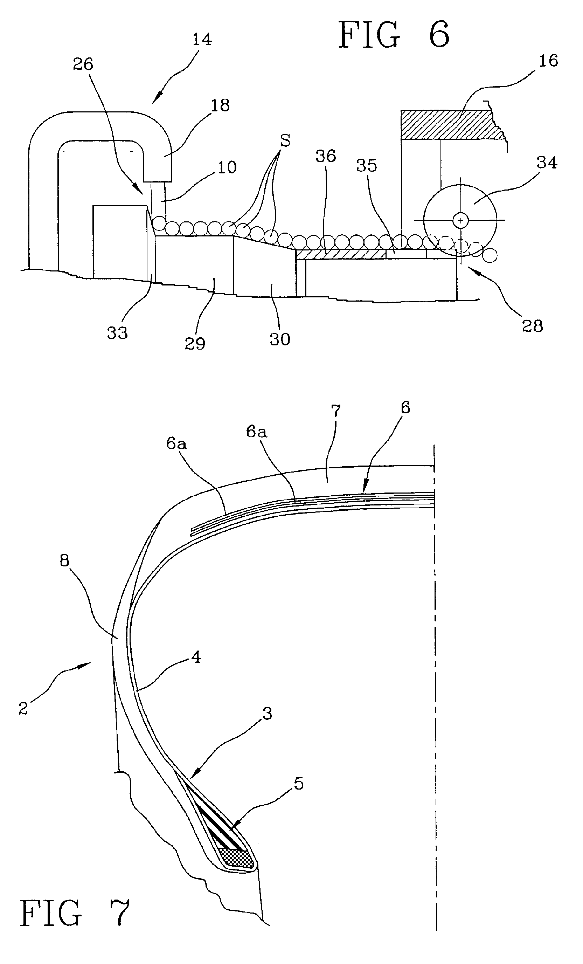

In more detail, apparatus 1 and the process carried into practice by same are designed to be integrated in a plant for tyre production. Just as an indication, a tyre obtainable in accordance with the invention is generally denoted at 2 in Fig. 7 and it essentially comprises a carcass structure 3 having at least one carcass ply 4 provided with end flaps 4a turned up around respective annular reinforcing structures at the beads 5. At a position radially external to the carcass ply 4 a belt structure 6 comprising one or more belt layers 6a is applied. A tread band 7 is applied to the belt structure 6 at a radially external position.. Extending from the opposite' side edges of the tread band 7 to close to the annular reinforcing structures 5 is a pair of sidewalls 8 laterally applied at an axially external position against the carcass structure 3.

The plant with which apparatus 1 is associated essentially comprises devices for preparing semifinished products adapted to form at least one of the above mentioned constituent elements of the tyre, at least one device for assembling the semifinished products in accordance with a predetermined assembling sequence, and at least one device for moulding and curing the assembled tyre. These devices are not further described or shown in detail as they can be made in a manner known in the art. They operate in such a manner as to manufacture tyres, following a method involving building of the carcass structure 3 by a preliminary step of preparing at least one carcass ply 4 in the form of a strip having respectively opposite first and second ends. With the aid of an building drum being part of the above mentioned devices for assembly of the semifinished products, the carcass ply 4 is wound according to a circumferential extension mutually joining the opposite ends of same to form a so-called carcass sleeve; associated with the respective opposite edges thereof, intended to constitute the above mentioned end flaps 4a, are then annular anchoring structures 5. Subsequently, the carcass structure 3 is given a toroidal conformation to carry out application of the belt structure 6 to the carcass structure itself, at a radially external position. Tyre assembly is completed with application of the sidewalls 8 that are laterally disposed on respectively opposite sides of the carcass structure 3, and of the tread band 7 that is disposed at a position radially external to the belt structure 6, so that a final step of moulding and curing the tyre is then carried out.

In a preferential embodiment, said tread band 7 is applied by winding at least one first continuous elongated element of elastomer material in circumferential coils on the belt structure 6.

In a further preferential embodiment application of said sidewalls 8 takes place by winding at least one continuous elongated element of elastomer material in circumferential coils on said carcass structure 3.

The apparatus 1 in accordance with the invention can advantageously be an integral part of the above mentioned devices suitable for preparation of the semifinished products. In more detail, apparatus 1 is designed to make a continuous semifinished product 9 comprising a plurality of cords or other type of elongated reinforcing elements, incorporated in an elastomer material, to be used for manufacture of said at least one carcass ply 4 and/or at least one of the layers 6a to be employed in forming the belt structure 6.

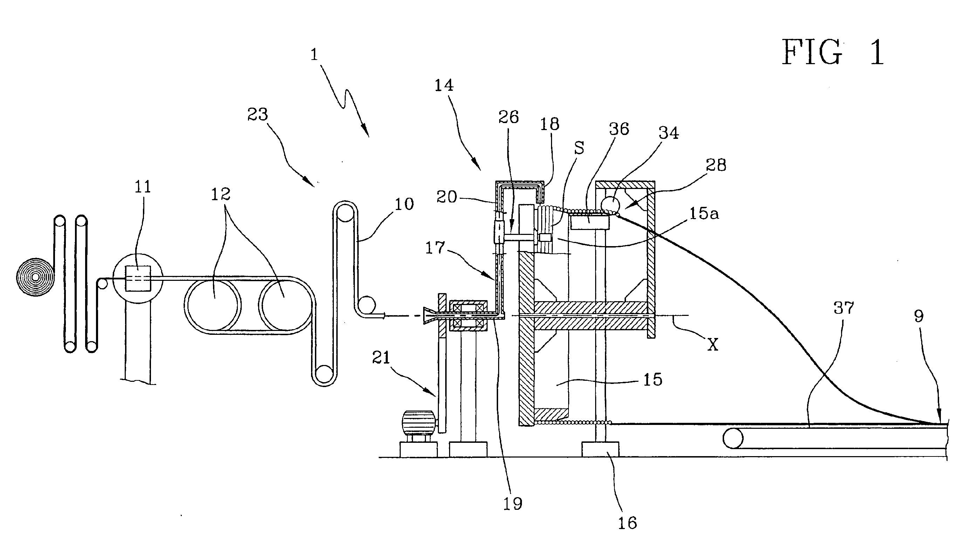

The semifinished product 9 is manufactured starting from at least one continuous elongated element 10 that may consist of a textile or metallic cord coated with a raw elastomer material, as provided in the embodiments referred to in Figs. 1 to 3, or by a strip-like element comprising two or more cords disposed longitudinally close to each other and incorporated in a raw elastomer material.

The continuous elongated element 10 may be prepared by a device for example comprising at least one extruder 11 longitudinally passed through by the elongated reinforcing element and set to extrude the elastomer coating so as to directly apply it onto the reinforcing element itself, while the latter is longitudinally dragged along by driving rollers 12 or equivalent actuating devices, as shown in Fig. 1 by way of example.

Alternatively, the continuous elongated element 10, in the form either of a cord or of a strip-like element, can be produced separately of apparatus 1 in a preceding working step, in which case the preparation devices can for example comprise at least one supply reel 13 from which the elongated element is unwound during the working process.

The continuous elongated element 10 coming from extruder 11, reel 13 or other preparation devices is submitted to the action of at least one winder 14 causing winding of same around a geometric axis X of a preferably cylindrical forming support 15, more preferably a forming support with a circular base, to form with the elongated element itself, a plurality of coils S in contact with each other.

Preferably, the forming support 15 is rigidly supported by a fixed structure 16, and winder 14 comprises at least one guide element 17 slidably engaging the continuous elongated element 10 in a guide path having an end stretch 18 oriented towards a deposition surface 15a which is preferably cylindrical with a circular base and is presented by the forming support 15. Preferably, the guide element 17 further has a centring stretch 19. extending in a direction substantially coaxial with the forming support 15, i.e. along axis X, and a deflection stretch 20 extending away from the centring stretch 19 towards the end stretch 18.

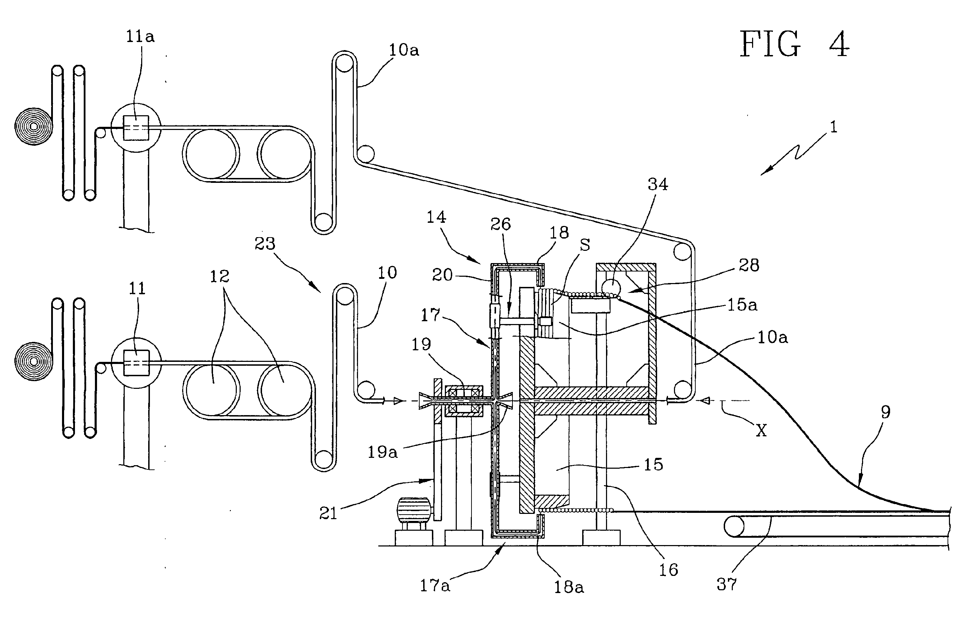

An actuating unit 21 operates on the guide element 17 so that the end stretch 18 rotates around the deposition surface 15a, in a concentric manner with the geometric axis X of the forming support 15. The continuous elongated element 10 directly coming from extruder 11 or reel 13 is consequently.dragged along the path defined by the guide element 17 and laid on the forming support 15 by effect of rotation of the guide element itself. In the examples shown in Figs. 1 and 4, denoted at 23 is a compensating device that, in known manner, engages an appropriate length of the continuous elongated element 10 to compensate for possible differences between the delivery speed of extruder 11 and the winding speed of the forming support 15.

In the embodiment shown in Fig. 4, apparatus 1 is set to carry out a simultaneous winding of two distinct elongated elements 10, 10a, each comprising a single cord or other suitable elongated reinforcing element.

To this aim, it may be provided that an auxiliary centring stretch 19a axially offset or preferably axially opposite with respect to the centring stretch 19 should be associated with the guide element 17 to engage the second continuous elongated element 10a coming from a respective extruder 11a or a supply reel, in a direction opposite to that from which the first continuous elongated element 10 comes.

In more detail, two guide elements 17, 17a are preferably arranged, said guide elements being rotatably supported in a manner concentric with the geometric axis X and angularly offset so as to present the respective end stretches 18, 18a for example at diametrically opposite points with respect to the forming support 15. The guide elements 18, 18a have the respective centring stretches 19, 19a connected at axially opposite positions, so as to be adapted to receive the respective continuous elongated elements 10, 10a coming from axially opposite directions. In this way it is possible to carry out a simultaneous winding of the continuous elongated elements 10, 10a coming from the respective extruders 11, 11a or alternatively from a single extruder without the rotation imposed by the guide elements 17, 17a around axis X causing any twisting effect of one elongated element on the other.

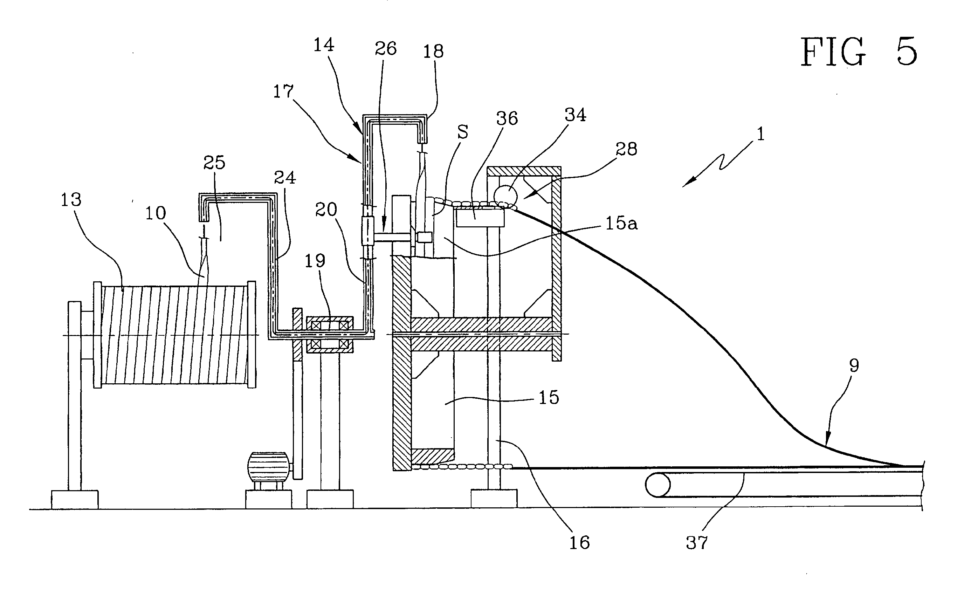

In the embodiment in Fig. 5 where the continuous elongated element 10 is made in the form of a strip-like element, the path defined by the guide element 17 may have, on the opposite side from the end stretch 18, an auxiliary deflection stretch 24 converging on the centring stretch 19 starting from an entry stretch 25 spaced apart from the geometric axis X preferably by a distance at least as long as the winding radius of the elongated element itself on the supply reel 13. Preferably, the supply reel 13 is rotatably supported according to a rotation axis substantially coaxial with the geometric axis X of the forming support 15.

The winding radius of the elongated element 10 on the supply reel 13 is preferably smaller than the winding radius of coils S on the forming support 15. Consequently, the amount of elongated' element 10 required for formation of each coil is taken away from reel 13 partly by effect of the unwinding operation carried out by rotation of the entry stretch 25 around the reel itself, and partly due to the rotation imposed to reel 13 by effect of the dragging action transmitted to the elongated element 10 by rotation of the guide element. The guide element 17 may be also provided to slidably engage the continuous elongated element 10 through at least one opening conforming in shape to the cross-section profile of the elongated element, so as to prevent the latter from rotating relative to the guide element 17 around the longitudinal extension thereof, thereby twining round itself.

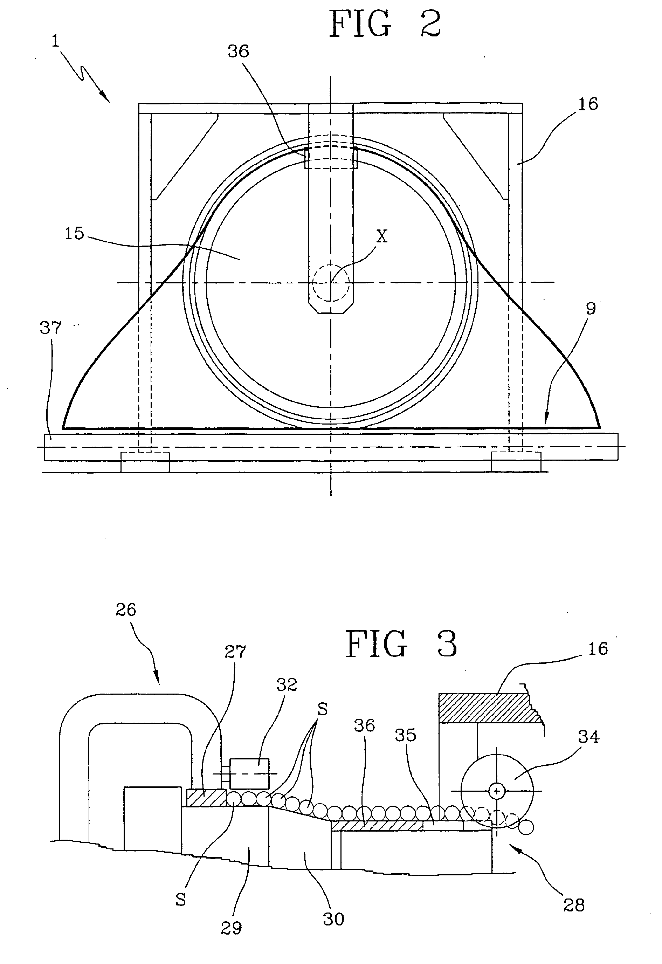

Apparatus 1 further comprises at least one translation device. 26 operating on the coils S that are gradually formed on the forming support 15 to translate them along the geometric axis X in the direction of a cutting region 28 set close to the forming support itself. In the embodiment better shown in Fig. 3, the translation devices 26 comprise at least one pusher element 27 movable around the deposition surface 15a of the forming support 15, in a trajectory substantially lying in a slightly offset plane in an axial direction with respect to the deposition point of the continuous elongated element 10 on the forming support itself. Preferably, the pusher element 27 is rigidly connected to the guide element 15, so as to slide on the deposition surface 15a and constantly follow the movement of the end stretch 18, at an angularly offset position with respect to the latter. Since the pusher element 27 is placed at a position axially offset towards the cutting region 28 relative to the deposition point of the elongated element 10, it interferes with the last-formed coil S so as to transmit an axial-thrust component to the latter, said component being directed towards the cutting region 28. At each point of the circumferential extension of the deposition surface 15a, the axial-thrust action resulting from passage of the pusher element 27 is repeated subsequently to formation of each coil S, thereby causing an axial advancing of the formed coil S by a pitch close to or corresponding to the diameter thereof or, in the embodiment shown in Fig. 5, to the width of the strip-like element forming the continuos elongated element 10.

Translation of each coil S upon the action of the axial component causes compacting of same against the coils S previously formed on the forming support 15, as well as the consequent translation of the latter towards the cutting region 28. Friction generated between the elastomer coating of coils S and the surface of the toroidal support 15 assures an appropriate counteraction to translation of coils S in opposition to the axial-thrust component, so as to cause a compression of the elastomer coating of each coil S against the elastomer coating of the previously laid coil S.

The assembly of coils S thus compacted substantially forms a cylindrical sleeve of a diameter corresponding to that of the deposition surface 15a of the forming support 15.

In order to contain friction generated on coils S within suitable limits, the deposition surface 15a may be possibly provided with an appropriate unsticky coating. In addition, the deposition surface 15a may be provided to have a cylindrical gauging portion 29 of preestablished axial size, set to engage a number of coils S included between 3 and 30 for example, followed by an end portion 30 tapering towards the cutting region 28 to progressively reduce friction generated against coils S translating towards the cutting region itself.

Also operatively connected'with the pusher element 27, to be made in the form of a roller or runner possibly coated with an antifriction material, can be at least one auxiliary roller 32 or other suitable presser element disposed in line or duly offset with respect to said pusher element, and arranged to transmit an auxiliary thrust component directed towards the forming support 15 to the elongated element 10, so as to eliminate the risk of the axial thrust component producing phenomena of overlapping of the_just formed coil S on the previously-formed adjacent coil S.

In a possible alternative embodiment of the translation devices 26, shown in Fig. 6, the forming support may be for example provided with a lead-in portion 33 converging on the deposition surface 15a from the opposite side with respect to the cutting region 28 and arranged to receive the continuous elongated element 10 coming from the winding devices 14. Under this situation, the axial-thrust component is exerted by laying the continuous elongated element 10 on the lead-in portion 33 of the forming support 15 so that, due to its extension converging towards the laying surface 15, a translation directed towards the cutting region 28 is imposed to coil S.

The translation devices 26 may be also provided to comprise at least one belt conveyor (not shown) extending from the forming support 15 to the cutting region 28, preferably so as to operate within the tubular sleeve formed of the compacted coils S to support it according to a horizontal axis.

Coils S gradually coming close to the cutting region 28 are submitted to the action of at least one cutter 34 comprising a rotating blade for example that operates at a longitudinal slit 35 formed in an auxiliary support member 36. This auxiliary support member axially extends in the continuation of the forming support 15, so as to support the sleeve formed of the compacted coils S by acting inside the latter.

Consequently, coils S are cut concurrently with their translation towards the cutting region 28 in a direction substantially perpendicular to their circumferential extension, by effect of cutter 34 operating in the translation direction of same.

Alternatively, cutting of coils S can be carried out repeatedly in subsequent steps, each on a predetermined length stretch of the tubular sleeve formed of the mutually compacted coils S.

The cutting action gives origin to the above mentioned continuous semifinished product 9 having a width corresponding to the circumferential extension of the deposition surface 15a on which coils S have been formed, and having elongated reinforcing elements disposed parallel to each other, represented by the cord sections obtained following cutting of coils S, each extending between two opposite longitudinal edges of the semifinished product.

In the examples shown in Figs. 1 to 4, where the continuous elongated element 10 utilised is made in the form of a single rubberised cord, orientation of the cord sections present in the continuous semifinished product 9 is substantially perpendicular to the longitudinal extension of the semifinished product itself. Such a semifinished product is particularly suitable for use in making a carcass ply for a tyre of the so-called "radial" type.

In the embodiment in Fig. 5 where the continuous elongated element comprises a plurality of cords or other reinforcing elements disposed parallel to each other, the winding angle of coils S on the forming support 15 can be modified depending on requirements by suitably selecting the width of the elongated element 10 utilised and the number of reinforcing elements therein present. Thus it is possible to establish orientation of the individual elongated reinforcing elements in advance, with respect to the longitudinal extension of the continuous semifinished product 9 obtained following the cutting operation, giving, if necessary, inclination values also suitable for manufacture of the belt layers 6a of the tyre.

When the cutting operation has been completed, the continuous semifinished product is caused to move forward, away from the cutting region 28 so that its opposite edges progressively move apart from each other till the manufactured article is laid on a collecting plane 37, along which the semifinished product is caused to advance concurrently with translation towards the cutting region 28 of the new coils S formed on the forming support 15.

The collecting plane 37 can advantageously be defined by a belt conveyor or equivalent handling device, adapted to feed a transverse cutter cyclically operating to sever a section of predetermined length from the continuous semifinished product 9, for preparing the carcass ply 4 and/or the belt structure 6 of a tyre 2. Advantageously, the transverse-cutting device can be directly associated with the above described devices for preparation of the semifinished products, being part of the plant for tyre building.

The present invention achieves important advantages.

The method and apparatus in reference in fact allow reels of semifinished product to be produced without any discontinuity connected with preparation of the junctions that are present in known processes and possibly allow said semifinished product to be reel wound to enable subsequent interlocking with several assembling machines of known type, advantageously with a continuous feeding of the semifinished product without a preliminary cutting being required.

In addition, the obtained continuous semifinished product can be adapted to be cut to size in sections of appropriate length for feeding a single assembling machine in line, depending on the circumferential sizes of the tyres that are to be built each time.

In addition, by merely replacing the forming support the apparatus can be adapted to the manufacture of semifinished products of different width. Furthermore, it is also possible to modify the orientation of the elongated reinforcing elements in the continuous semifinished product by suitably selecting the width of the continuous elongated element to be wound on the forming support.

## Claims

1. A process for producing a semifinished product consisting of a plurality of elongated reinforcing elements incorporated in an elastomer material, comprising the following steps:
- preparing at least one continuous elongated element (10) including at least one elongated reinforcing element and a raw elastomer coating applied to said reinforcing element;
- guiding the continuous elongated element (10) along a guide path comprising an end stretch (18) directed to a cylindrical deposition surface (15a) presented by a forming support (15),
a centring stretch (19) extending in a direction substantially coaxial with the forming support (15), and a deflection stretch (20) extending away from the centring stretch (19) to said end stretch (18);
- winding said continuous elongated element (10) on the forming support (15) to form coils (S) in contact with each other wound around a geometric axis (X) of said forming support (15);
- translating the coils (S) along said geometric axis (X) to a cutting region (28);
- cutting the coils (S) at the cutting region (28), to form a continuous semifinished product (9) having elongated reinforcing elements disposed parallel to each other, each extending between two opposite longitudinal edges of the semifinished product (9).

2. A process as claimed in claim 1, wherein preparation of the continuous elongated element (10) is carried out by movement of said at least one elongated reinforcing element lengthwise through an extruder (11) for extrusion of the elastomer coating.

3. A process as claimed in claim 2, wherein the continuous elongated element (10) coming out of the extruder (11) is directly connected with the coil (S) being laid down.

4. A process as claimed in claim 1, wherein said continuous elongated element (10) comprises a single elongated reinforcing element.

5. A process as claimed in claim 1, wherein said continuous elongated element (10) comprises a plurality of elongated reinforcing elements disposed parallel and close to each other.

6. A process as claimed in claim 1, wherein the winding step is carried out through rotation of the end stretch (18) of the guide path in a concentric manner with the geometric axis (X) of the forming support (15).

7. A process as claimed in claim 1, wherein two distinct elongated elements (10, 10a) are simultaneously submitted to the winding step on the forming support (15).

8. A process as claimed in claim 7, wherein said elongated elements (10, 10a) are guided along guide paths having axially opposite centring stretches (19, 19a) .

9. A process as claimed in claim 1, wherein the translation step is repeated after formation of each coil (S).

10. A process as claimed in claim 1, wherein translation of the coils (S) is carried out by exerting a thrust component parallel to the geometric axis (X) of the forming support (15) on the last coil (S) laid on the forming support (15).

11. A process as claimed in claim 10, wherein the thrust component is exerted by translating a pusher element (27) onto the forming support (15), which pusher element is movable concentrically of said geometric axis (X) substantially in an axially offset plane with respect to a deposition point of the continuous elongated element (10) on the forming support itself.

12. A process as claimed in claim 10, wherein the axial thrust component is exerted by laying the continuous elongated element (10) on a lead-in portion (33) of the forming support (15) converging on the deposition surface (15a) from the opposite side with respect to the cutting region (28).

13. A process as claimed in claim 1, further comprising the step of counteracting translation of the coils (S) in opposition to said thrust component, to determine a compression of the elastomer coating of each coil (S) against the elastomer coating of the previously laid coil (S).

14. A process as claimed in claim 13, wherein the counter action to translation of the coils (S) is progressively reduced in the direction of the cutting region (28).

15. A process as claimed in claim 10, wherein simultaneously with said thrust component an auxiliary thrust component directed against the forming support (15) is exerted on the last-laid coil (S).

16. A process as claimed in claim 1, wherein the step of cutting the coils (S) is carried out concurrently with the translation step.

17. A process as claimed in claim 1, wherein the step of cutting the coils (S) is carried out by arranging a cutter (34) operating in the translation direction of the coils themselves.

18. A process as claimed in claim 1, wherein the step of cutting the coils (S) is carried out after translation of same.

19. A process as claimed in claim 1, further comprising the step of transferring the coils (S) from the forming member (15) to an auxiliary support member (36) before carrying out the step of cutting the coils (S).

20. A process as claimed in claim 1, further comprising the step of translating the continuous semifinished product (9) onto a collecting plane (37) concurrently with translation of the coils (S) to the cutting region (28).

21. A process as claimed in claim 20, wherein the ends of the cut coils (S) are moved away from each other to lay the continuous semifinished product (9) on the collecting plane (37).

22. A method of producing vehicle tyres, comprising the steps of:
- building a carcass structure (3) by' at least the steps of:
- preparing at least one carcass ply (4) having respectively opposite first and second ends;
- mutually joining the opposite ends of the carcass ply (4) to form a carcass sleeve;
- associating annular reinforcing structures (5) with respective opposite edges of the carcass sleeve;
- giving said carcass structure (3) a toroidal conformation;
- preparing a belt structure (6) comprising at least one belt layer;
- applying said belt structure (6) to said carcass structure (3) at a radially external position;
- laterally applying a pair of sidewalls (8) to the carcass structure at respectively opposite sides thereof;
- applying a tread band (7) to said belt structure (6), at a radially external position;
- moulding and curing the tyre;
wherein preparation of at least one element selected between said at least one carcass ply (4) and said at least one belt layer comprises the step of cutting a section of predetermined length from a continuous semifinished product (9) obtained from a process as claimed in anyone of the preceding claims.

23. A method as claimed in claim 22, wherein said tread band (7) is applied by winding at least one first continuous elongated element of elastomer material in circumferential coils on the belt structure (6).

24. A method as claimed in claim 22, wherein said pair of sidewalls (8) is applied by winding at least one continuous elongated element of elastomer material in circumferential coils around said carcass structure (3).

25. An apparatus for producing a semifinished product comprising a plurality of elongated reinforcing elements incorporated in an elastomer material, comprising:
- at least one device for preparing at least one continuous elongated element (10) including at least one elongated reinforcing element coated with a raw elastomer material applied to said elongated reinforcing element;
- at least one device (14) for winding said continuous elongated element on a forming support (15) to form coils (S) in contact with each other and wound around a geometric axis (X) of the forming support (15);
- at least one device (26) for translating the coils (S) along said geometric axis (X) to a cutting region (28);
- at least one cutter (34) to cut the coils (S) at the cutting region (28), to form a continuous semifinished product having elongated reinforcing elements disposed parallel and close to each other, each extending between two opposite longitudinal edges of the semifinished product (9), **characterized in that**
said winding device (14) comprises a guide element (17) slidably engaging the continuous elongated element (20) according to a guide path having an end stretch (18) directed to a deposition surface (15a) presented by the forming support (15),
wherein said guide element (17) further has a centring stretch (19) extending in a direction substantially coaxial with the forming support (15), and a deflection stretch (20) extending away from the centring stretch (19) to the end stretch (18).

26. An apparatus as claimed in claim 25, wherein said preparation device comprises at least one extruder (11) for extrusion of the' elastomer coating, and devices (12) for moving the elongated reinforcing element (10) lengthwise through the extruder (11).

27. An apparatus as claimed in claim 25, wherein said preparation device comprises at least one reel (13) for supply .of the continuous elongated element (10).

28. An apparatus as claimed in claim 25, wherein said winding device (14) further comprises at least one unit (21) for driving the guide element (17) in rotation around the geometric axis (X) of the forming support (15).

29. An apparatus as claimed in claim 25, wherein said at least one guide element (17) further comprises at least one auxiliary centring stretch (19a) axially opposite to said centring stretch (19) to engage a second continuous elongated element (10a).

30. An apparatus as claimed in claim 25, wherein said translation devices (26) comprise at least one pusher element (27) movable around a deposition surface (15a) of the forming support (15) according to a trajectory substantially lying in an axially offset plane relative to a deposition point of the continuous elongated element (10) on the forming support itself, to transmit an axial thrust component to the continuous elongated element (10) laid on the forming support (15).

31. An apparatus as claimed in claim 30, wherein said pusher element (27) is rigidly carried by said at least one winding device (14).

32. An apparatus as claimed in claim 30, further comprising at least one presser element (32) operatively connected with the pusher element (27) to transmit an auxiliary thrust component directed to the forming support (15) to the elongated element (9).

33. An apparatus as claimed in claim 25, wherein the forming support (15) has a deposition surface (15a) having at least one end portion (30) tapering towards the cutter (34).

34. An apparatus as claimed in claim 25, wherein said translation devices comprise a lead-in portion (33) of the forming support (15) converging on the deposition surface (15a) towards the cutting region (28) and set to receive the continuous elongated element (9) coming from the winding devices (14).

35. An apparatus as claimed in claim 25, wherein said translation devices (26) comprise at least one belt conveyor extending from the forming support (15) to the cutting region (28).

36. An apparatus as claimed in claim 34, wherein said cutter comprises a rotating blade (34) operating at a longitudinal slit (35) formed in an auxiliary support member (36) axially extending in the continuation of the forming support (15).

37. A plant for manufacturing tyres for vehicle wheels, comprising:
- devices for preparing semifinished products adapted to form at least one constituent element of the tyre;
- at least one device for assembling said semifinished products;
- at least one moulding and curing device;
wherein said devices for preparing the semifinished products comprise an apparatus (1) as claimed in one or more of claims 25 to 36.

## Patentansprüche

1. Verfahren zum Herstellen eines Halbfabrikats, das aus einer Vielzahl an länglichen Verstärkungselementen besteht, die in einem elastomeren Material aufgenommen sind, mit den folgenden Schritten:
- Bereitstellen mindestens eines kontinuierlichen länglichen Elements (10) mit mindestens einem länglichen Verstärkungselement und einer Rohelastomerbeschichtung, die auf dem Verstärkungselement angebracht ist;
- Führen des kontinuierlichen länglichen Elements (10) entlang eines Führungspfads mit einer Endstrecke (18), die auf eine durch einen Formträger (15) bereitgestellte zylindrische Ablagefläche (15a) ausgerichtet ist, einer Zentrierstrecke (19), die sich in einer mit dem Formträger (15) im Wesentlichen koaxialer Richtung erstreckt, und einer Ablenkungsstrecke (20), die sich von der Zentrierstrecke (19) weg zu der Endstrecke (18) hin erstreckt;
- Aufwickeln des kontinuierlichen Elements (10) auf dem Formträger (15), um miteinander in Kontakt stehende Spulen (S) zu bilden, die um eine geometrische Achse (X) des Formträgers (15) gewickelt sind;
- Verschieben der Spulen (S) entlang der geometrischen Achse (X) zu einem Schneidebereich (28) ;
- Schneiden der Spulen (S) bei dem Schneidebereich (28), um ein kontinuierliches Halbfabrikat (9) mit länglichen Verstärkungselementen zu bilden, die parallel zueinander angeordnet sind und sich jeweils zwischen zwei entgegengesetzten Längskanten des Halbfabrikats (9) erstrecken.

2. Verfahren nach Anspruch 1, bei dem das Bereitstellen des kontinuierlichen länglichen Elements (10) durch Bewegen des mindestens einen länglichen Verstärkungselements in Längsrichtung mittels eines Extruders (11) zur Extrusion der Elastomer-Beschichtung durchgeführt wird.

3. Verfahren nach Anspruch 2, bei dem das kontinuierliche längliche Element (10), das aus dem Extruder (11) herauskommt, direkt mit der Spule (S) verbunden ist, die abgelegt wird.

4. Verfahren nach Anspruch 1, bei dem das kontinuierliche längliche Element (10) ein einzelnes längliches Verstärkungselement aufweist.

5. Verfahren nach Anspruch 1, bei dem das kontinuierliche längliche Element (10) eine Vielzahl an länglichen Verstärkungselementen aufweist, die parallel und nahe zueinander angeordnet sind.

6. Verfahren nach Anspruch 1, bei dem der Aufwicklungsschritt durch in einer mit der geometrischen Achse (X) des Formträgers (15) konzentrischen Weise Drehen der Endstrecke (18) des Führungspfads durchgeführt wird.

7. Verfahren nach Anspruch 1, bei dem zwei unterschiedliche längliche Elemente (10, 10a) dem Aufwicklungsschritt auf dem Formträger (15) simultan unterworfen werden.

8. Verfahren nach Anspruch 7, bei dem die länglichen Elemente (10, 10a) entlang von Führungspfaden geführt werden, die axial entgegengesetzte Zentrierstrecken (19, 19a) aufweisen.

9. Verfahren nach Anspruch 1, bei dem der Verschiebungsschritt nach dem Bilden jeder Spule (S) wiederholt wird.

10. Verfahren nach Anspruch 1, bei dem eine Verschiebung der Spulen (S) durchgeführt wird, indem eine zu der geometrischen Achse (X) des Formträgers (15) parallele Schubkomponente auf die letzte auf den Formträger (15) gelegte Spule (X) ausgeübt wird.

11. Verfahren nach Anspruch 10, bei dem die Schubkomponente ausgeübt wird, indem ein Schubelement (27) auf den Formträger (15) verschoben wird, wobei das Schubelement konzentrisch zu der geometrischen Achse (X) im Wesentlichen in einer axial versetzten Ebene in Bezug auf einen Ablagepunkt des kontinuierlichen länglichen Elements (10) auf dem Formträger selbst bewegbar ist.

12. Verfahren nach Anspruch 10, bei dem die axiale Schubkomponente ausgeübt wird, indem das kontinuierliche längliche Element (10) auf einen hineinführenden Abschnitt (33) des Formträgers (15) gelegt wird, der von der entgegengesetzten Seite in Bezug auf den Schneidebereich (28) zu der Ablagefläche (15a) konvergiert.

13. Verfahren nach Anspruch 11, das ferner den Schritt umfasst: einer Verschiebung der Spulen (S) entgegen der Schubkomponente Entgegenwirken, um eine Kompression der Elastomerbeschichtung jeder Spule (S) gegen die Elastomerbeschichtung der zuvor abgelegten Schicht (S) zu bestimmen.

14. Verfahren nach Anspruch 13, bei dem die Gegenbetätigung zur Verschiebung der Spulen (S) in Richtung des Schneidebereichs (28) schrittweise verringert wird.

15. Verfahren nach Anspruch 10, bei dem simultan mit der Schubkomponente eine gegen den Formträger (15) gerichtete Hilfsschubkomponente auf die zuletzt abgelegte Spule (S) ausgeübt wird.

16. Verfahren nach Anspruch 1, bei dem der Schritt des Schneidens der Spulen (S) gleichzeitig mit dem Verschiebungsschritt durchgeführt wird.

17. Verfahren nach Anspruch 1, bei dem der Schritt des Schneidens der Spulen (S) durchgeführt wird, indem ein Schneider (34) angeordnet wird, der in der Verschiebungsrichtung der Spulen selbst wirkt.

18. Verfahren nach Anspruch 1, bei dem der Schritt des Schneidens der Spulen (S) nach einer Verschiebung derselben durchgeführt wird.

19. Verfahren nach Anspruch 1, das vor der Ausführung des Schritts des Schneidens der Spulen (S) ferner den Schritt des von dem Formelement (15) zu einem Hilfsstützelement (36) Verlagerns der Spulen (S) umfasst.

20. Verfahren nach Anspruch 1, das ferner den Schritt des mit einer Verschiebung der Spulen (S) zu dem Schneidebereich (28) gleichzeitigen Verschiebens des kontinuierlichen Halbfabrikats (9) auf eine Sammelebene (37) umfasst.

21. Verfahren nach Anspruch 20, bei dem die Enden der geschnittenen Spulen (S) voneinander wegbewegt werden, um das kontinuierliche Halbfabrikat (9) auf die Sammelebene (37) zu legen.

22. Verfahren zum Herstellen von Fahrzeugreifen, das die Schritte umfasst:
- Bilden einer Karkassenstruktur (3) mindestens durch die Schritte:
- Bereitstellen mindestens einer Karkassenschicht (4) mit jeweils entgegengesetzten ersten und zweiten Enden;
- gegenseitiges Verbinden der entgegengesetzten Enden der Karkassenschicht (4) zum Bilden einer Karkassenhülse;
- Verbinden von ringförmigen Verstärkungsstrukturen (5) mit jeweiligen entgegengesetzten Kanten der Karkassenhülse;
- der Karkassenstruktur (3) Verleihen einer Torusform;
- Bereitstellen einer Gürtelstruktur (6) mit mindestens einer Gürtelschicht;
- Anbringen der Gürtelstruktur (6) auf die Karkassenstruktur (3) bei einer radial äußeren Position;
- seitliches Anbringen eines Paars an Seitenwänden (8) auf die Karkassenstruktur bei jeweiligen entgegengesetzten Seiten derselben;
- Anbringen eines Laufflächenbands (7) der Gürtelstruktur (6) bei einer radial äußeren Position;
- Ausformen und Vulkanisieren des Reifens;
wobei das Bereitstellen mindestens eines Elements, das aus der mindestens einen Karkassenschicht (4) und der mindestens einen Gürtelschicht ausgewählt ist, den Schritt des Schneidens eines Bereichs einer vorgegebenen Länge aus einem kontinuierlichen Halbfabrikat (9) umfasst, das gemäß einem Verfahren nach einem der vorstehenden Ansprüche erzeugt wurde.

23. Verfahren nach Anspruch 22, bei dem das Laufflächenband (7) angebracht wird, indem mindestens ein erstes kontinuierliches längliches Element aus elastomerem Material in Umfangswindungen auf die Gürtelstruktur (6) aufgewickelt wird.

24. Verfahren nach Anspruch 22, bei dem das Paar an Seitenwänden (8) angebracht wird, indem mindestens ein kontinuierliches längliches Element aus elastomerem Material in Umfangswindungen um die Karkassenstruktur (3) gewickelt wird.

25. Vorrichtung zum Herstellen eines Halbfabrikats mit einer Vielzahl an länglichen Verstärkungselementen, die in einem elastomeren Material aufgenommen sind, mit:
- mindestens einer Einrichtung zum Bereitstellen mindestens eines kontinuierlichen länglichen Elements (10) mit mindestens einem länglichen Verstärkungselement, das mit einem Rohelastomermaterial beschichtet ist, welches auf das längliche Verstärkungselement angebracht ist;
- mindestens einer Einrichtung (14) zum auf einem Formträger (15) Aufwickeln des kontinuierlichen länglichen Elements, um Spulen (S) zu bilden, die miteinander in Kontakt stehen und um eine geometrische Achse (X) des Formträgers (15) gewickelt sind;
- mindestens einer Einrichtung (26) zum entlang der geometrischen Achse (X) zu einem Schneidebereich (28) Verschieben der Spulen (S);
- mindestens einem Schneider (34) zum Schneiden der Spulen (S) bei dem Schneidebereich (28), um ein kontinuierliches Halbfabrikat mit länglichen Verstärkungselementen zu bilden, die parallel und nahe zueinander angeordnet sind und die sich jeweils zwischen zwei entgegengesetzten Längskanten des Halbfabrikats (9) erstrecken, **dadurch gekennzeichnet, dass**
die Aufwicklungseinrichtung (14) ein Führungselement (17) aufweist, das mit dem kontinuierlichen länglichen Element (20) gleitbar in Eingriff gelangt, gemäß einem Führungspfad mit einer Endstrecke (18), die auf eine durch den Formträger (15) bereitgestellte Ablagefläche (15a) ausgerichtet ist,
wobei das Führungselement (17) ferner eine Zentrierstrecke (19), die sich in einer Richtung erstreckt, die im Wesentlichen koaxial mit dem Formträger (15) verläuft, und eine Ablenkungsstrecke (20) aufweist, die sich von der Zentrierstrecke (19) weg zu der Endstrecke (18) hin erstreckt.

26. Vorrichtung nach Anspruch 25, bei der die Bereitstell-Einrichtung mindestens einen Extruder (11) zur Extrusion der Elastomerbeschichtung und Einrichtungen (12) zum durch den Extruder (11) in Längsrichtung Bewegen des länglichen Verstärkungselements (10) aufweist.

27. Vorrichtung nach Anspruch 25, bei der die Bereitstell-Einrichtung mindestens eine Spule (13) zum Zuführen des kontinuierlichen länglichen Elements (10) aufweist.

28. Vorrichtung nach Anspruch 25, bei der die Aufwicklungseinrichtung (14) ferner mindestens eine Einheit (21) zum in Drehung Versetzen des Führungselements (17) um die geometrische Achse (X) des Formträgers (15) aufweist.

29. Vorrichtung nach Anspruch 25, bei der das mindestens eine Führungselement (17) ferner mindestens eine Zentrierhilfsstrecke (19a) zum Eingriff mit einem zweiten kontinuierlichen länglichen Element (10a) aufweist, die zu der Zentrierstrecke (19) axial entgegengesetzt angeordnet ist.

30. Vorrichtung nach Anspruch 25, bei der die Verschiebungseinrichtungen (26) mindestens ein Schubelement (27) aufweisen, das um eine Ablagefläche (15a) des Formträgers (15) gemäß einer Bahn bewegbar ist, die im Wesentlichen in einer axial versetzten Ebene relativ zu einem Ablagepunkt des kontinuierlichen länglichen Elements (10) auf dem Formträger selbst liegt, zum Übertragen einer axialen Schubkomponente an das kontinuierliche längliche Element (10), das auf den Formträger (15) gelegt ist.

31. Vorrichtung nach Anspruch 30, bei dem das Schubelement (27) starr durch die mindestens eine Aufwicklungseinrichtung (14) getragen wird.

32. Vorrichtung nach Anspruch 30, die ferner mindestens ein Druckelement (32) aufweist, das mit dem Schubelement (27) wirkverbunden ist, zum auf das längliche Element (9) Übertragen einer Hilfsschubkomponente, die auf den Formträger (15) hin ausgerichtet ist.

33. Vorrichtung nach Anspruch 25, bei welcher der Formträger (15) eine Ablagefläche (15a) aufweist, die mindestens einen Endabschnitt (30) aufweist, der in Richtung des Schneiders (34) verjüngt ausgebildet ist.

34. Vorrichtung nach Anspruch 25, bei der die Verschiebungseinrichtungen einen hineinführenden Abschnitt (33) des Formträgers (15) aufweisen, der bei der Ablagefläche (15a) in Richtung des Schneidbereichs (28) konvergiert und dazu festgelegt ist, das kontinuierliche Element (9) aufzunehmen, das aus den Aufwicklungseinrichtungen (16) herauskommt.

35. Vorrichtung nach Anspruch 25, bei der die Verschiebungseinrichtungen (26) mindestens einen Förderer aufweisen, der sich von dem Formträger (15) zu dem Schneidebereich (28) erstreckt.

36. Vorrichtung nach Anspruch 34, bei welcher der Schneider eine Laufschaufel (34) aufweist, die bei einem Längsschlitz (35) arbeitet, der in einem Hilfsstützelement (36) ausgebildet ist, das sich in der Verlängerung des Formträgers (15) erstreckt.

37. Fabrik zum Herstellen von Reifen für Fahrzeugräder, mit:
- Einrichtungen zum Bereitstellen von Halbfabrikaten, die zum Bilden mindestens eines Bestandteils des Reifens ausgebildet sind;
- mindestens einer Einrichtung zum Zusammenbauen der Halbfabrikate;
- mindestens einer Ausform- und Vulkanisiereinrichtung;
wobei die Einrichtungen zum Bereitstellen der Halbfabrikate eine Vorrichtung (1) gemäß einem oder mehreren der Ansprüche 25-36 aufweisen.

## Revendications

1. Procédé pour produire un produit semi-fini consistant en une pluralité d'éléments de renfort allongés incorporés dans un matériau élastomère, comprenant les étapes suivantes :
- préparer au moins un élément allongé continu (10) incluant au moins un élément de renfort allongé et un revêtement élastomère brut appliqué audit élément de renfort ;
- guider l'élément allongé continu (10) le long d'un chemin de guidage comprenant un tronçon d'extrémité (18) dirigé vers une surface de dépôt cylindrique (15a) présentée par un support de formage (15), un tronçon de centrage (19) s'étendant dans une direction sensiblement coaxiale au support de formage (15), et un tronçon de déviation (20) s'étendant depuis le tronçon de centrage (19) vers ledit tronçon d'extrémité (18) ;
- enrouler ledit élément allongé continu (10) sur le support de formage (15) pour former des spires (S) en contact les unes avec les autres enroulées autour d'un axe géométrique (X) dudit support de formage (15) ;
- translater les spires (S) le long dudit axe géométrique (X) vers une zone de coupe (28) ;
- couper les spires (S) dans la zone de coupe (28), pour former un produit semi-fini continu (9) présentant des éléments de renfort allongés disposés parallèlement les uns aux autres, chacun s'étendant entre deux bords longitudinaux opposés du produit semi-fini (9).

2. Procédé selon la revendication 1, dans lequel la préparation de l'élément allongé continu (10) est réalisée par mouvement dudit au moins un élément de renfort allongé longitudinalement à travers une extrudeuse (11) pour extrusion du revêtement élastomère.

3. Procédé selon la revendication 2, dans lequel l'élément allongé continu (10) sortant de l'extrudeuse (11) est directement relié à la spire (S) en train d'être déposée.

4. Procédé selon la revendication 1, dans lequel ledit élément allongé continu (10) comprend un seul élément de renfort allongé.

5. Procédé selon la revendication 1, dans lequel ledit élément allongé continu (10) comprend une pluralité d'éléments de renfort allongés disposés parallèlement et à proximité les uns des autres.

6. Procédé selon la revendication 1, dans lequel l'étape d'enroulement est réalisée par rotation du tronçon d'extrémité (18) du chemin de guidage d'une manière concentrique avec l'axe géométrique (X) du support de formage (15).

7. Procédé selon la revendication 1, dans lequel deux éléments allongés distincts (10, 10a) sont soumis simultanément à l'étape d'enroulement sur le support de formage (15).

8. Procédé selon la revendication 7, dans lequel lesdits éléments allongés (10, 10a) sont guidés le long de chemins de guidage présentant des tronçons de centrage axialement opposés (19, 19a).

9. Procédé selon la revendication 1, dans lequel l'étape de translation est répétée après formation de chaque spire (S).

10. Procédé selon la revendication 1, dans lequel la translation des spires (S) est réalisée en exerçant une composante de poussée parallèle à l'axe géométrique (X) du support de formage (15) sur la dernière spire (S) posée sur le support de formage (15).

11. Procédé selon la revendication 10, dans lequel la composante de poussée est exercée par translation d'un élément pousseur (27) sur le support de formage (15), lequel élément pousseur est déplaçable concentriquement audit axe géométrique (X) sensiblement dans un plan axialement décalé par rapport à un point de dépôt de l'élément allongé continu (10) sur le support de formage lui-même.

12. Procédé selon la revendication 10, dans lequel la composante de poussée axiale est exercée par pose de l'élément allongé continu (10) sur une partie d'amenée (33) du support de formage (15) convergeant sur la surface de dépôt (15a) du côté opposé par rapport à la zone de coupe (28).

13. Procédé selon la revendication 1, comprenant en outre l'étape de contrecarrer la translation des spires (S) en opposition à ladite composante de poussée, pour déterminer une compression du revêtement élastomère de chaque spire (S) contre le revêtement élastomère de la spire précédemment posée (S).

14. Procédé selon la revendication 13, dans lequel l'action de contrecarrer la translation des spires (S) est progressivement réduite dans la direction de la zone de coupe (28).

15. Procédé selon la revendication 10, dans lequel simultanément avec ladite composante de poussée une composante de poussée auxiliaire dirigée contre le support de formage (15) est exercée sur la dernière spire posée (S).

16. Procédé selon la revendication 1, dans lequel l'étape de coupe des spires (S) est réalisée concurremment à l'étape de translation.

17. Procédé selon la revendication 1, dans lequel l'étape de coupe des spires (S) est réalisée en agençant un outil de coupe (34) fonctionnant dans la direction de translation des spires elles-mêmes.

18. Procédé selon la revendication 1, dans lequel l'étape de coupe des spires (S) est réalisée après leur translation.

19. Procédé selon la revendication 1, comprenant en outre l'étape de transfert des spires (S) de l'organe de formage (15) vers un organe de support auxiliaire (36) préalablement à la réalisation de l'étape de coupe des spires (S).

20. Procédé selon la revendication 1, comprenant en outre l'étape de translater le produit semi-fini continu (9) sur un plan de collecte (37) concurremment à la translation des spires (S) vers la zone de coupe (28).

21. Procédé selon la revendication 20, dans lequel les extrémités des spires coupées (S) sont éloignées les unes des autres pour poser le produit semi-fini continu (9) sur le plan de collecte (37).

22. Procédé pour produire des pneus de véhicule, comprenant les étapes de :
- construire une structure de carcasse (3) par au moins les étapes de :
- préparer au moins une nappe de carcasse (4) présentant des première et deuxième extrémités respectivement opposées ;
- joindre mutuellement les extrémités opposées de la nappe de carcasse (4) pour former un manchon de carcasse ;
- associer des structures de renfort annulaires (5) à des bords opposés respectifs du manchon de carcasse ;
- procurer à ladite structure de carcasse (3) une conformation toroïdale ;
- préparer une structure de ceinture (6) comprenant au moins une couche de ceinture ;
- appliquer ladite structure de ceinture (6) à ladite structure de carcasse (3) en une position radialement externe ;
- appliquer latéralement une paire de flancs (8) à la structure de carcasse en des côtés respectivement opposés de celle-ci_;
- appliquer une bande de roulement (7) à ladite structure de ceinture (6), en une position radialement externe ;
- mouler et cuire le pneu ;
dans lequel une préparation d'au moins un élément choisi entre ladite au moins une nappe de carcasse (4) et ladite au moins une couche de ceinture comprend l'étape de couper une section d'une longueur prédéterminée d'un produit semi-fini continu (9) obtenu par un procédé selon l'une quelconque des revendications précédentes.

23. Procédé selon la revendication 22, dans lequel ladite bande de roulement (7) est appliquée par enroulement d'au moins un premier élément allongé continu en matériau élastomère en spires circonférentielles sur la structure de ceinture (6).

24. Procédé selon la revendication 22, dans lequel ladite paire de flancs (8) est appliquée par enroulement d'au moins un élément allongé continu en matériau élastomère en spires circonférentielles autour de ladite structure de carcasse (3).

25. Appareil pour produire un produit semi-fini comprenant une pluralité d'éléments de renfort allongés incorporés dans un matériau élastomère, comprenant :
- au moins un dispositif pour préparer au moins un élément allongé continu (10) incluant au moins un élément de renfort allongé revêtu d'un matériau élastomère brut appliqué audit élément de renfort allongé ;
- au moins un dispositif (14) pour enrouler ledit élément allongé continu sur un support de formage (15) pour former des spires (S) en contact les unes avec les autres et enroulées autour d'un axe géométrique (X) du support de formage (15) ;
- au moins un dispositif (26) pour translater les spires (S) le long dudit axe géométrique (X) vers une zone de coupe (28) ;
- au moins un outil de coupe (34) pour couper les spires (S) dans la zone de coupe (28), pour former un produit semi-fini continu présentant des éléments de renfort allongés disposés parallèlement et à proximité les uns des autres, chacun s'étendant entre deux bords longitudinaux opposés du produit semi-fini (9),
**caractérisé en ce que** ledit dispositif d'enroulement (14) comprend un élément de guidage (17) venant en prise en coulissement avec l'élément allongé continu (20) selon un chemin de guidage présentant un tronçon d'extrémité (18) dirigé vers une surface de dépôt cylindrique (15a) présentée par le support de formage (15), ledit élément de guidage (17) présentant en outre un tronçon de centrage (19) s'étendant dans une direction sensiblement coaxiale au support de formage (15), et un tronçon de déviation (20) s'étendant depuis le tronçon de centrage (19) vers le tronçon d'extrémité (18).

26. Appareil selon la revendication 25, dans lequel ledit dispositif de préparation comprend au moins une extrudeuse (11) pour extruder le revêtement élastomère, et des dispositifs (12) pour déplacer l'élément allongé continu (10) longitudinalement à travers l'extrudeuse (11).

27. Appareil selon la revendication 25, dans lequel ledit dispositif de préparation comprend au moins un dévidoir (13) pour fournir l'élément allongé continu (10).

28. Appareil selon la revendication 25, dans lequel ledit dispositif d'enroulement (14) comprend au moins une unité (21) pour mettre en rotation l'élément de guidage (17) autour de l'axe géométrique (X) du support de formage (15).

29. Appareil selon la revendication 25, dans lequel ledit au moins un élément de guidage (17) comprend en outre au moins un tronçon de centrage auxiliaire (19a) opposé axialement audit tronçon de centrage (19) pour venir en prise avec un deuxième élément allongé continu (10a).

30. Appareil selon la revendication 25, dans lequel lesdits dispositifs de translation (26) comprennent au moins un élément de poussée (27) déplaçable autour d'une surface de dépôt (15a) du support de formage (15) selon une trajectoire s'étendent sensiblement dans un plan axialement décalé par rapport à un point de dépôt de l'élément allongé continu (10) sur le support de formage lui-même, pour transmettre une composante de poussée axiale à l'élément allongé continu (10) posé sur le support de formage (15).

31. Appareil selon la revendication 30, dans lequel ledit élément de poussée (27) est rigidement porté par ledit au moins un dispositif d'enroulement (14).

32. Appareil selon la revendication 30, comprenant en outre au moins un élément presseur (32) fonctionnellement relié à l'élément pousseur (27) pour transmettre à l'élément allongé (9) une composante de poussée auxiliaire dirigée vers le support de formage (15).

33. Appareil selon la revendication 25, dans lequel le support de formage (15) a une surface de dépôt (15a) présentant au moins une partie d'extrémité (30) s'amincissant en direction de l'outil de coupe (34).

34. Appareil selon la revendication 25, dans lequel lesdits dispositifs de translation comprennent une partie d'amenée (33) du support de formage (15) convergeant sur la surface de dépôt (15a) vers la région de coupe (28) et installée pour recevoir l'élément allongé continu (9) provenant des dispositifs d'enroulement (14).

35. Appareil selon la revendication 25, dans lequel lesdits dispositifs de translation (26) comprennent au moins un convoyeur à bande s'étendant du support de formage (15) à la zone de coupe (28).

36. Appareil selon la revendication 34, dans lequel l'outil de coupe comprend une lame rotative (34) fonctionnant dans une fente longitudinale (35) formée dans un organe de support auxiliaire (36) s'étendant axialement dans la continuation du support de formage (15).

37. Installation pour fabriquer des pneus pour roues de véhicule, comprenant :
- des dispositifs pour préparer des produits semi-finis adaptés pour former au moins un élément constituant du pneu ;
- au moins un dispositif pour assembler lesdits produits semi-finis ;
- au moins un dispositif de moulage et de cuisson ;
dans lequel lesdits dispositifs pour préparer les produits semi-finis comprennent un appareil (1) selon l'une ou plusieurs des revendications 25 à 36.
